# EUROPÄISCHE PATENTANMELDUNG

(11) **EP 3 156 274 A1**
(43) Veröffentlichungstag der Anmeldung: **19.04.2017**
(21) Anmeldenummer: 16190296.0
(22) Anmeldetag: 23.09.2016
(51) Int. Cl.: B60K 7/00, B60K 17/04, B60K 17/30, B62D 7/02, B66F 9/075

(54) **ANTRIEBSEINHEIT FÜR EIN FLURFÖRDERFAHRZEUG**

(30) Priorität: 13.10.2015 DE 102015013141
(71) Anmelder: Kordel Antriebstechnik GmbH, 48249 Dülmen (DE)
(72) Erfinder: Raue, Josef, 48249 Dülmen (DE)
(74) Vertreter: Demski, Siegfried

(57) **Zusammenfassung**

Die Erfindung betrifft eine Antriebseinheit 1, insbesondere für ein Flurförderfahrzeug, zumindest umfassend ein Getriebegehäuse 4 mit wenigstens einer Getriebestufe 2, 3, einem Antriebsmotor und einem Laufrad 14. Um die Kosten bei deutlich höheren Belastungen des Laufrades 14 zu minimieren ist erfindungsgemäß vorgesehen, dass das Laufrad 14 unmittelbar mit einem abtriebsseitigen Kegelrad 12 verbunden ist, welches durch ein erstes Lagerelement 15 zur Lastaufnahme und durch ein zweites Lagerelement 23 zur Stabilisierung dient und im Getriebegehäuse 4 abgestützt ist. Das erste Lagerelement 15 trägt hierbei sämtliche Lasten, während das zweite Lagerelement 23 mit einer wesentlich geringeren Dimensionierung lediglich auftretende Kippkräfte auffangen muss.

## Beschreibung

Die Erfindung betrifft eine Antriebseinheit, insbesondere für ein Flurförderfahrzeug, zumindest umfassend ein Getriebegehäuse mit wenigstens einer Getriebestufe, einem Antriebsmotor und einem Laufrad.

Antriebseinheiten der gattungsgemäßen Art werden für Flurförderfahrzeuge benötigt und dienen dem Vortrieb des Flurförderfahrzeuges sowie der Lenkbeweglichkeit. Die Antriebseinheiten sind hierbei über ein Drehkranzlager mit dem Flurförderfahrzeug verbunden und können eine 360 Grad Bewegung ausführen, sodass eine Lenkung der Flurförderfahrzeuge auf engstem Raum möglich ist. Die Antriebseinheiten müssen hierbei hohe Anforderungen hinsichtlich der Belastungen tragen, die sich durch das Fahrzeuggewicht und dessen Zuladung ergeben. Des Weiteren werden über diese Antriebseinheiten hohe Antriebskräfte auf das Laufrad oder gegebenenfalls ein Doppellaufrad zum Vortrieb übertragen.

Der Aufbau einer solchen Antriebseinheit ist beispielsweise aus der DE-PS 31 33 027 bekannt. Dieser Stand der Technik offenbart ein Einradtriebwerk für ein Flurförderfahrzeug, bei dem bei einer zweistufigen Getriebeausführung auf die E-Motorenwelle ein Ritzel angeordnet ist, dass ein Stirnrad antreibt. Über eine Antriebswelle, die sich vom Stirnrad bis zu einem Kegelrad erstreckt, wird das Drehmoment auf ein abgehendes Kegelrad übertragen, welches in der Regel unmittelbar mit einem Laufradträger und einem Laufrad verbunden ist. Zur Übertragung hoher Drehmomente und Aufnahme entsprechender Lasten von mehreren Tonnen ist die gesamte Konstruktion des Einradtriebwerkes hinsichtlich der Gehäusegestaltung und der beiden Getriebestufen entsprechend dimensioniert.

Aus der EP 1 285 803 A1 ist ebenfalls ein Einradtriebwerk bekannt, welches eine spezielle Bauvariante aufweist, und zwar ruht das abgangsseitige Getrieberad auf einem koaxial innenliegenden feststehenden Stützelement des Gehäuses. Die Lagerung erfolgt in diesem Fall über zwei paarig angeordnete Wälzlager. Die gesamte hierbei zu tragende Last durch das Laufrad wird in diesem speziellen Fall über die Innenringe der Wälzlager auf das Getriebegehäuse übertragen.

Diese Lösung eines Einradtriebwerkes beziehungsweise einer Antriebseinheit hat sich bestens bewährt, ist aber aufgrund der gewählten Konstruktion durch das Lagerelement aufwendig und kostenintensiver.

Der vorliegenden Erfindung liegt die Aufgabe zugrunde, eine neue Antriebseinheit für ein Flurförderfahrzeug aufzuzeigen, welche bei gleichbleibender oder verbesserter Belastbarkeit eine kostengünstigere Herstellung ermöglicht.

Erfindungsgemäß ist zur Lösung der Aufgabenstellung vorgesehen, dass das Laufrad unmittelbar mit einem abtriebsseitigen Kegelrad verbunden ist, welches durch ein erstes Lagerelement zur Lastaufnahme die zu tragende Last über den Lageraußenring ins Getriebegehäuse einleitet und durch ein zweites Lagerelement zur Stabilisierung gegenüber dem Getriebegehäuse abgestützt ist. Weitere vorteilhafte Ausgestaltungen der Erfindung ergeben sich aus den Unteransprüchen.

Um eine Erhöhung der Belastbarkeit der Antriebseinheit zu erzielen und die Kräfte von dem Laufrad über den Lageraußenring in das Getriebegehäuse des Flurförderfahrzeugs zu übertragen wird zumindest ein, vorzugsweise mehrere Lagerelemente benötigt. Mit einer Steigerung der Belastbarkeit des Laufrades besteht hierbei ferner die Notwendigkeit ein verwendetes Stützelement entsprechend zu dimensionieren und gleichzeitig ein belastbares Lagerelement einzusetzen. Sobald mehr als ein Lagerelement benötigt wird, steigen hierbei die Herstellungskosten deutlich. Die vorliegende Erfindung geht davon aus, dass die auftretenden Belastungen lediglich durch ein erstes Lagerelement aufgenommen werden und ein zweites deutlich kleineres Lagerelement nur zur Stabilisierung gegenüber dem Getriebegehäuse verwendet wird. Stabilisierung bedeutet in diesem Fall, die Anordnung bestehend aus Laufrad, Laufradträger und Kegelrad so abzustützen, dass auftretende Kippkräfte ohne weiteres in das Getriebegehäuse eingeleitet werden können und damit die Fahrstabilität und Seitenführung des Laufrades gewährleistet ist. Der besondere Vorteil entsteht hierbei ferner dadurch, dass nur ein einzelnes größeres Lagerelement benötigt wird, welches zur Lastaufnahme vorgesehen ist und entsprechend dimensioniert werden kann, während demgegenüber das zweite Lagerelement nicht zur Aufnahme der Hauptlast verwendet wird und lediglich zur Stabilisierung eingesetzt wird, wodurch das zweite Lagerelement entsprechend klein dimensioniert werden kann und damit ein Kostenvorteil erzielt wird.

Um die Anzahl der Komponenten der Antriebseinheit zu reduzieren ist ferner vorgesehen, dass das Laufrad unmittelbar mit einem abtriebseitigen Kegelrad verbunden ist. Über das Kegelrad können große Drehmomente auf das Laufrad übertragen werden, ohne dass eine zusätzliche Welle erforderlich wird.

In Ausgestaltung der Erfindung ist vorgesehen, dass das Getriebegehäuse eine dem Laufrad diametral abgewandte Gehäuserückwand aufweist, welche vollständig geschlossen und einstückig ausgebildet ist, oder dass das Getriebegehäuse eine dem Laufrad diametral abgewandte Gehäuserückwand aufweist, wobei das Getriebegehäuse durch die Gehäuserückwand und eine Kappe verschlossen ist. Das Gehäuse kann somit ebenfalls kostengünstig hergestellt werden und ermöglicht eine verbesserte Montage und Demontage der gesamten Antriebseinheit. Bei dieser Konstruktion können die unteren Getriebekomponenten bezüglich des Kegelrades über einen Gehäusedeckel in das Getriebegehäuse eingebaut werden, ohne dass Beeinträchtigungen vorliegen. Darüber hinaus können die erforderlichen Abdichtungsmaßnahmen des Getriebegehäuses auf ein Minimum reduziert werden, wobei vorzugsweise ein Abdichtungsring in Höhe des ersten Lagerelementes angeordnet wird und nach Entfernen des Dichtungselementes und des gegenüberliegenden Deckels der Ausbau der weiteren Getriebekomponenten in umgekehrter Reihenfolge erfolgen kann, sodass ein Austausch defekter Teile jederzeit auf einfache Art und Weise möglich ist. Insbesondere ist überhaupt keine Getriebedemontage erforderlich, um das Dichtungselement, welches über die Einsatzzeit des Getriebes einen Verschleiß unterliegt, zu wechseln. Das Dichtungselement ist nach der Abnahme des Laufrades und Entfernung des Schutzringes direkt demontierbar ohne hierbei die Verzahnung nebst Wälzlager demontieren zu müssen. Ferner kommt hinzu, dass eine Abdichtung durch ein Dichtungselement ausreichend ist und Kosten für weitere Dichtungselemente entfalten.

In einer ersten Ausführungsvariante ist vorgesehen, dass das Kegelrad ein in Richtung der Gehäuserückwand einstückig angeformtes Stützelement aufweist, welches zur Aufnahme des zweiten Lagerelementes vorgesehen ist. Alternativ kann das Kegelrad eine in Richtung zur Gehäusewand offene Ausnehmung aufweisen. Soweit das Kegelrad mit einem Stützelement versehen ist, wird das Getriebegehäuse auf der Innenseite mit einer topfförmigen Ausnehmung ausgestattet, in welche das Kegelrad mit seinem Stützelement hineinragt. Soweit das Kegelrad mit einer Ausnehmung ausgestattet ist, kann demgegenüber das Getriebegehäuse ein in Richtung zum Laufrad ausgebildetes Stützelement aufweisen, welches wiederum zur Aufnahme des zweiten Lagerelementes vorgesehen ist. In beiden Fällen besteht eine hohe Montage- und Demontagefreundlichkeit, einerseits werden nur wenige Einzelteile benötigt und andererseits können diese von einer Seite nach Entfernen des Dichtungselementes ein- beziehungsweise ausgebaut werden. Die eingesetzten Stützelemente, wahlweise können sie dem Getriebegehäuse oder dem Kegelrad zugeordnet sein, ermöglichen die Anordnung des zweiten Lagerelementes, wobei dieses zwar koaxial zu dem Lagerelement angeordnet ist, aber gegenüber diesen seitlich versetzt angeordnet wird, sodass die entstehenden Kippmomente aufgefangen werden können.

In weiterer Ausgestaltung der Erfindung ist vorgesehen, dass das erste Lagerelement koaxial innenliegend zum Laufrad und innerhalb der Laufradbreite angeordnet ist, wodurch die sichere Einleitung der auftretenden Lastkräfte in das Getriebegehäuse ermöglicht wird. Das erste Lagerelement weist hierbei eine innere und eine äußere Lagerschale auf, in dem sich die rotierenden Lagerelemente befinden. Alternativ besteht die Möglichkeit, dass das erste Lagerelement eine äußere Lagerschale aufweist, während die innere Lagerschale durch eine Ausnehmung des Kegelrades gebildet wird. Durch die Ausbildung der inneren Lagerschale auf dem Umfang des Kegelrades können die Kosten des ersten Lagerelementes weiter reduziert werden. Hierbei können die inneren und äußeren Lagerschalen des ersten Lagerelementes axial verschieblich ausgebildet sein und sind durch einen Sicherungsring innerhalb des Getriebegehäuses festlegbar. Diese Möglichkeit wird dann in Erwägung gezogen, wenn nur eine Lagerschale zum Einsatz kommt und die zweite Lagerschale durch eine Außenflächen des Kegelrades zur Verfügung steht. Ansonsten wird das erste Lagerelement durch einen Sicherungsring innerhalb des Getriebegehäuses festgelegt.

Die Position des zweiten Lagerelementes kann je nach Ausführungsform des Getriebegehäuses und des Kegelrades gewählt werden, wobei dieses in jedem Fall auf einem ausgebildeten Stützelement ruht. Nach einer ersten Ausgestaltung kann das zweite Lagerelement auf dem Stützelement des Kegelrades aufsitzen und in einer Ausnehmung des Getriebegehäuses einsitzen. Alternativ kann das zweite Lagerelement auf dem Stützelement des Getriebegehäuses aufsitzen und in einer Ausnehmung des Kegelrades einsitzen. Beide Lösungen sind denkbar und reduzieren die Herstellungskosten, weil die verwendeten zweiten Lagerelemente keinen hohen Beanspruchungen ausgesetzt sind.

Bei den verschiedenen Ausgestaltungen des Getriebegehäuses wird in der Regel das Kegelrad als Hohlrad ausgebildet, beispielsweise wenn das Stützelement auf der Innenseite des Getriebegehäuses angeformt ist. Alternativ kann das Kegelrad zur Übertragung der Lastkräfte vollwandig ausgebildet sein und mit einer axialen Verlängerung gleichzeitig das Stützelement für das zweite Lagerelement zur Verfügung stellen, während demgegenüber das Getriebegehäuses mit einer entsprechenden Ausnehmung versehen ist, in die das Stützelement mit zweitem Lagerelement hineinragt.

Die gesamte Antriebseinheit besteht in diesem Fall aus einer ersten Getriebestufe, welche durch ein Antriebsritzel des Antriebsmotors und ein angetriebenes Stirnrad gebildet wird, während die zweite Getriebestufe aus einer Antriebswelle mit Schrägverzahnung und dem Kegelrad besteht. Die Antriebswelle selbst kann innerhalb des Getriebegehäuses über weitere Lagerelemente abgestützt sein, wobei sich die koaxialseitige Anordnung der Lagerelemente am Ende der Antriebswelle bewährt hat.

Die gesamte Antriebseinheit ist im weiteren über einen Drehkranzlager mit dem Flurförderfahrzeug verbunden, wobei das Getriebegehäuse mit dem Drehkranzlagerinnenring unmittelbar verbunden ist oder ein horizontal verlaufender oberer Gehäusedeckel bereits als Drehkranzlagerinnenring ausgebildet ist.

In einer bevorzugten Ausgestaltung ist vorgesehen, dass das Laufrad unmittelbar mit einem abtriebsseitigen Kegelrad verbunden ist, welches über eine Verzahnung mit der Antriebswelle kämmt und durch ein erstes Lagerelement zur Lastaufnahme, die zu tragende Last über den Lageraußenring ins Getriebegehäuse einleitet und durch ein zweites Lagerelement zur Stabilisierung gegenüber dem Getriebegehäuse abgestützt ist.

Der Vorteil der vorliegenden Erfindung besteht darin, dass durch den Einsatz zweier Lagerelemente, welche beabstandet aber koaxial zueinander angeordnet sind, einerseits die entstehenden Lastkräfte sicher aufgefangen werden und hierzu ein entsprechend dimensioniertes erstes Lagerelement ausreichend ist, während demgegenüber eine Kostenreduzierung durch die Verwendung eines zweiten Lagerelementes erzielt wird, das lediglich zur Aufnahme von Kippkräften dient und damit entsprechend geringer dimensioniert sein kann. Im Weiteren ist der gesamte Aufbau der Antriebseinheit dadurch von Vorteil, dass die Rückwand des Getriebegehäuses in sich geschlossen einstückig hergestellt wird und somit die einzelnen Komponenten der Getriebestufen in die Antriebseinheit sehr leicht ein- und wieder ausgebaut werden können. In diesem speziellen Fall ist im Weiteren von Vorteil, dass ein Dichtungselement, welches beispielsweise in Betrieb durch den Laufradträger zusätzlich abgeschirmt ist, das gesamte Getriebegehäuse abdichtet und nach dem Entfernen des Dichtungselementes sämtliche inneren Komponenten der Antriebseinheit zugänglich sind.

Die Erfindung wird im Weiteren anhand der Figuren nochmals erläutert.

Es zeigt
- Fig. 1: in einer geschnittenen Seitenansicht einer Antriebseinheit in einer ersten Ausführungsform,
- Fig. 2: in einer geschnittenen Seitenansicht eine zweite Ausführungsform einer Antriebseinheit und
- Fig. 3: in einer geschnittenen Seitenansicht eine dritte Ausführungsform einer Antriebseinheit.

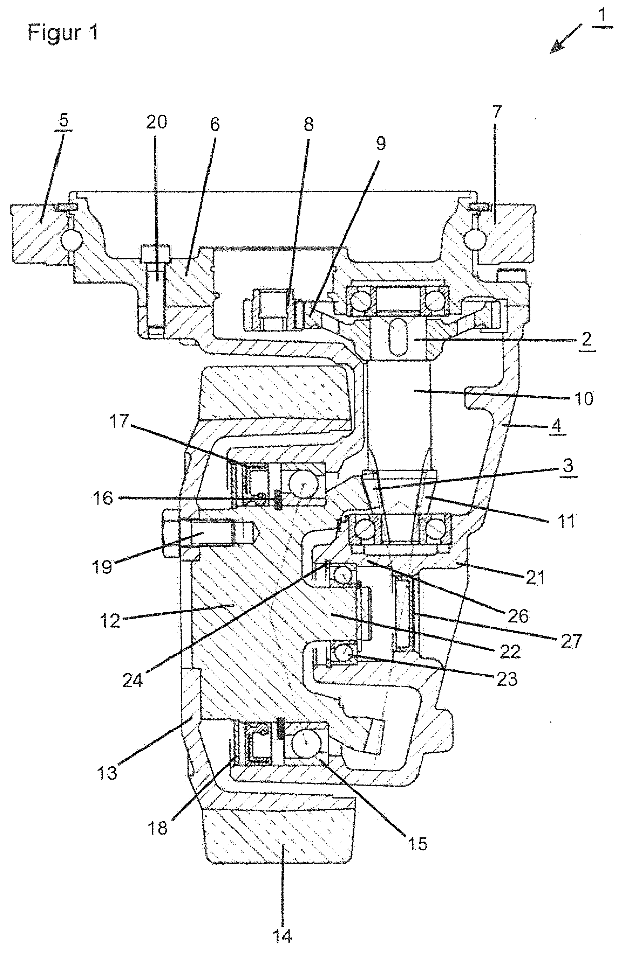

Figur 1 zeigt in einer geschnittenen Ansicht eine Antriebseinheit 1, welche über eine erste Getriebestufe 2 und eine zweite Getriebestufe 3 verfügt. Die beiden Getriebestufen 2, 3 sind in einem Getriebegehäuse 4 eingebaut, welches über einen Drehkranzlager 5 mit einem nicht dargestellten Flurförderfahrzeug verbunden werden kann. In dem gezeigten Ausführungsbeispiel ist der Gehäusedeckel des Getriebegehäuses 4 bereits als Drehkranzlagerinnenring 6 ausgebildet und wird von dem Drehkranzlageraußenring 7 aufgenommen. Der Drehkranzlagerinnenring 6 dient hierbei gleichzeitig zur Aufnahme eines nicht gezeigten Elektromotors, welcher mithilfe eines Ritzels 8 und eines Stirnrades 9 die erste Getriebestufe 2 bildet. Über eine Welle 10 erfolgt die Übertragung des Drehmomentes über eine Schrägverzahnung 11 auf ein Kegelrad 12. Sowohl das Ritzel 8 als auch das Stirnrad 9 kämmen miteinander und ebenso die Schrägverzahnung 11 mit dem Kegelrad 12. Das Kegelrad 12 dient im Weiteren zur Befestigung eines Laufradträgers 13 mit einem Laufrad 14. Durch das Drehkranzlager 5 ist das Getriebegehäuse 4 mit den Getriebestufen 2, 3 über einen Winkelbereich von 360 Grad verschwenkbar, sodass mithilfe der Antriebseinheit 1 und des Laufrades 14 nicht nur der Vortrieb, sondern auch eine Lenkung eines Flurförderfahrzeuges vorgenommen werden kann.

Zur Aufnahme einer Nutzlast des Flurförderfahrzeuges von mehreren Tonnen ist das Laufrad 14 mit Laufradträger 13 und das Kegelrad 12 über ein erstes Lagerelement 15 abgestützt. Dieses Lagerelement 15 dient zur Aufnahme sämtlicher Lasten, die durch das Eigengewicht und den Transport von Waren durch die Flurförderfahrzeuge entstehen können. Das Lagerelement 15 wird hierbei innerhalb des Getriebegehäuses 4 durch einen Sicherungsring 16 fixiert und zusätzlich durch ein Dichtungselement 17 nach außen abgedichtet, wobei das Dichtungselement 17 das gesamte Getriebegehäuse 4 abdichtet. Durch einen einpressbaren Schutzring 18 ist das Dichtungselement 17 ferner vor Beschädigungen und Verschmutzungen geschützt. Die Verbindung zwischen Laufradträger 13 und Kegelrad 12 erfolgt über mehrere Schraubbolzen 19, ebenso wie eine Verschraubung des Gehäusedeckels 6 mit dem Getriebegehäuse 4 über weitere Schraubbolzen 20.

Die Besonderheit dieser Antriebseinheit 1 besteht darin, dass das Kegelrad 12 im Wesentlichen aus einem Vollmaterial besteht und ein in Richtung auf eine Gehäuserückwand 21 ausgerichtetes Stützelement 22 aufweist. Auf dem Stützelement 22 ist ein zweites Lagerelement 23 befestigt und mit zwei Sicherungsringen 24, 25 festgelegt. Das zweite Lagerelement 23 sitzt auf dem Stützelement 22 auf und in einer Ausnehmung 26 des Getriebegehäuses 4 ein. Das Stützelement 22 ragt hierbei in die Ausnehmung 26 hinein. Im gezeigten Ausführungsbeispiel ist die Gehäuserückwand 21 nicht vollständig geschlossen, sondern weist einen Durchbruch auf, der durch eine einpressbare Kappe 27 verschlossen ist.

Das zweite Lagerelement 23 ist wesentlich geringer dimensioniert als das erste Lagerelement 15 und dient lediglich zu Aufnahme entstehender Kippkräfte, damit eine vertikale Position des Laufrades 14 eingehalten wird.

Der besondere Vorteil dieser Ausführungsform besteht darin, dass ein einzelnes erstes Lagerelement 15 eingesetzt werden kann und nur ausreichend dimensioniert werden muss, um die entsprechenden Lasten aufzunehmen. Das zweite Lagerelement 23 hingegen ist nicht zur Lastaufnahme vorgesehen, sondern lediglich zur Aufnahme eventueller Kippkräfte und kann daher entsprechend geringer dimensioniert werden, sodass nicht unerhebliche Kosten eingespart werden können.

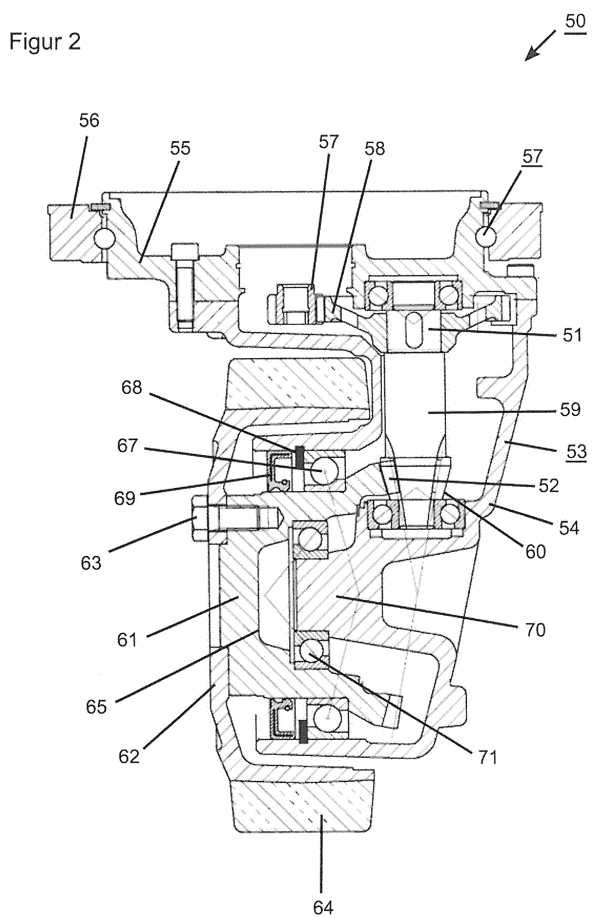

Figur 2 zeigt in einer geschnittenen Seitenansicht eine zweite Antriebseinheit 50, welche ebenfalls zwei Getriebestufen 51, 52 aufweist. Die beiden Getriebestufen 51, 52 sind in einem Getriebegehäuse 53 eingebaut, welches bei dieser Ausführungsvariante eine vollständig geschlossene Gehäuserückwand 54 aufweist. Das Getriebegehäuse 53 ist im oberen Bereich durch einen Getriebedeckel verschlossen, der wiederum als Drehkranzlagerinnenring 55 ausgebildet ist und somit zusammen mit dem Drehkranzlageraußenring 56 ein Drehkranzlager bildet. Die erste Getriebestufe 51 ist wie bei dem ersten Ausführungsbeispiel aufgebaut und besteht aus einem Antriebsritzel 57, welches auf der Welle eines nicht dargestellten Elektromotors sitzt und mit einem Stirnrad 59 kämmt. Das Stirnrad 58 ist auf einer Welle 59 montiert, die an dem gegenüberliegenden Ende mit einer Schrägverzahnung 60 ausgestattet ist, die wiederum mit einem Kegelrad 61 kämmt. Das Kegelrad 61 dient zur Befestigung eines Laufradträgers 62, der mithilfe von Schraubbolzen 63 befestigt wird. Der Laufradträger 62 dient zu Montage eines Laufrades 64. Das Kegelrad 61 ist gegenüber dem ersten Ausführungsbeispiel topfförmig ausgebildet und weist eine Ausnehmung 65 auf, in die ein Stützelement 66 der Gehäuserückwand 54 des Getriebegehäuses 53 hineinragt.

Über ein erstes Lagerelement 67 ist das Kegelrad 61 gegenüber dem Getriebegehäuse 53 abgestützt, wobei das Lagerelement 67 wiederum durch einen Sicherungsring 68 festgelegt und durch ein Dichtungselement 69 abgedichtet ist. Das Dichtungselement 69 dichtet hierbei das gesamte Getriebegehäuse 53 ab, wobei nach Demontage des Laufradträgers 62 mit Laufrad 64 eine Zugänglichkeit zum Getriebegehäuse 53 besteht, um die Demontage beziehungsweise Montage der Getriebestufen vornehmen zu können. Das Getriebegehäuse 53 ist in diesem speziellen Fall mit einer einstückigen Getrieberückwand versehen und besitzt ein Stützelement 70, welches in die Ausnehmung 65 des Kegelrades 61 hineinragt. Auf dem Stützelement 70, welches einstückig mit der Gehäuserückwand ausgebildet ist, sitzt ein zweites Lagerelement 71, welches sich an dem Kegelrad 61 abstützt. Über das zweite Lagerelement 71 werden wiederum Kippkräfte aufgefangen, sodass das Laufrad 64 in einer horizontalen Position verbleibt. Das erste Lagerelement 67 nimmt sämtliche Lasten auf, während das zweite Lagerelement 71 lediglich zur Sicherung von Kippkräften vorgesehen ist.

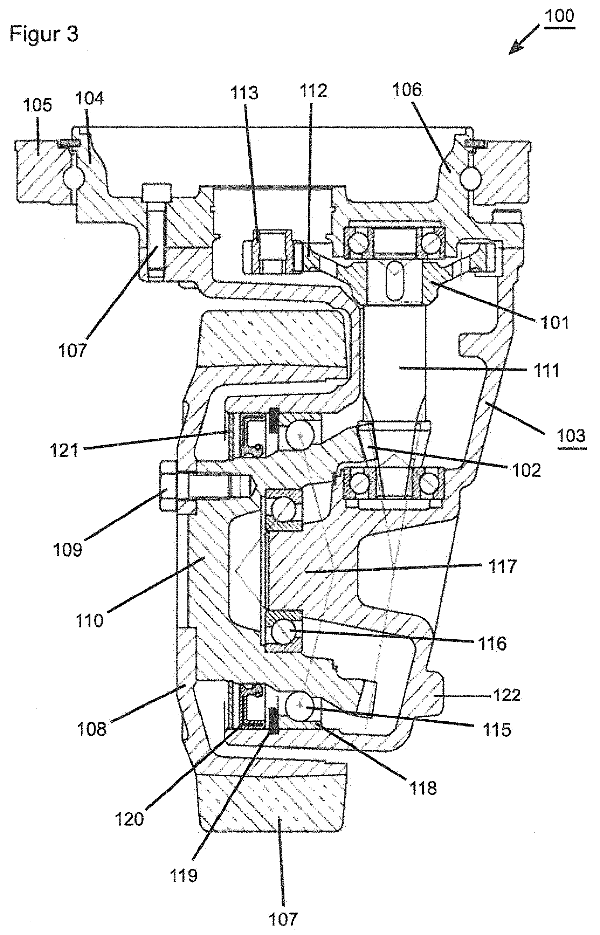

Figur 3 zeigt in einer geschnittenen Seitenansicht eine Antriebseinheit 100, mit einer ersten Getriebestufe 101 und einer zweiten Getriebestufe 102. Die beiden Getriebestufen 101, 102 sind in einem Getriebegehäuse 103 eingebaut, welches über einen Drehkranzlager 104 mit einem nicht dargestellten Flurförderfahrzeug verbunden ist. Das Drehkranzaußenlager 105 ist hierbei mit dem Flurförderfahrzeug verbunden, während der Drehkranzlagerinnenring 106 gleichzeitig als oberer Gehäusedeckel des Getriebegehäuses 103 ausgebildet ist. Über Schraubbolzen 107 ist der Drehkranzlagerinnenring 106 beziehungsweise der Gehäusedeckel mit den weiteren Gehäuseteilen verbunden. Das Getriebegehäuse 103 dient hierbei zur Aufnahme eines Laufrades 108, welches über einen Laufradträger 109 durch Schraubbolzen 114 mit einem Kegelrad 110 verbunden ist. Das Kegelrad 110 ist Bestandteil der zweiten Getriebestufe 102 und kämmt mit einer Schrägverzahnung der Antriebswelle 111. Die Antriebswelle 111 besitzt einenends ein Stirnrad 112, welches durch ein Ritzel 113 eines nicht dargestellten Elektromotors antreibar ist. Bei dieser Ausführungsvariante ist das Kegelrad 110 über ein erstes Lagerelement 115 gegenüber dem Getriebegehäuse 103 abgestützt. Auftretende Kippkräfte werden hierbei über ein zweites Lagerelement 116 aufgefangen und in das Getriebegehäuse 103 eingeleitet. Bei dieser Konstruktion ist das Kegelrad 110 topfförmig ausgebildet und ermöglicht somit eine koaxiale Anordnung eines Stützelementes 117, welches einstückig an eine Gehäuserückwand 122 als Getriebegehäuse 103 angeformt ist. Das Stützelement ist koaxial zu den ersten und zweiten Lagerelementen 115, 116 und dem Laufrad 108 angeordnet. Das zweite Lagerelement 116 sitzt mit seinem Innenring unmittelbar auf dem Stützelement 117 auf und stützt mit dem Außenring das Kegelrad 110 ab. Die Position des zweiten Lagerelementes 116 ist in diesem Fall so gewählt worden, dass es sich innerhalb der Breite des Laufrades 108 befindet. Das Kegelrad 110 ist durch das erste Lagerelement 115 gegenüber dem Getriebegehäuse 103 abgestützt, wobei das erste Lagerelement 115 aus einer äußeren Lagerschale 118 besteht, während auf eine innere Lagerschale verzichtet wurde und stattdessen eine Lagerfläche auf der Außenseite des Kegelrades 110 ausgebildet ist. Über einen Sicherungsring 119 ist die äußere Lagerschale innerhalb des Getriebegehäuses 103 fixiert. Über einen Dichtungsring 120 ist sowohl der Sicherungsring 119 als auch das erste Lagerelement 115 abgedichtet. Durch diese Baumaßnahmen besteht die Möglichkeit nach Abnahme des Laufrades 108 die weitere Demontage der beiden Getriebestufen von einer Seite des Getriebegehäuses 103 durchzuführen. Der Dichtungsring 120 ist ferner durch einen Schutzring 121 geschützt.

### Bezugszeichenliste

- 1: Antriebseinheit
- 2: Getriebestufe
- 3: Getriebestufe
- 4: Getriebegehäuse
- 5: Drehkranzlager
- 6: Drehkranzlagerinnenring
- 7: Drehkranzlageraußenring
- 8: Ritzel
- 9: Stirnrad
- 10: Welle
- 11: Schrägverzahnung
- 12: Kegelrad
- 13: Laufradträger
- 14: Laufrad
- 15: Lagerelement
- 16: Sicherungsring
- 17: Dichtungselement
- 18: Schutzring
- 19: Schraubbolzen
- 20: Schraubbolzen
- 21: Gehäuserückwand
- 22: Stützelement
- 23: Lagerelement
- 24: Sicherungsring
- 25: Sicherungsring
- 26: Ausnehmung
- 27: Kappe
- 50: Antriebseinheit
- 51: Getriebestufe
- 52: Getriebestufe
- 53: Getriebegehäuse
- 54: Gehäuserückwand
- 55: Drehkranzlagerinnenring
- 56: Drehkranzlageraußenring
- 57: Antriebsritzel
- 58: Stirnrad
- 59: Welle
- 60: Schrägverzahnung
- 61: Kegelrad
- 62: Laufradträger
- 63: Schraubbolzen
- 64: Laufrad
- 65: Ausnehmung
- 66: Stützelement
- 67: Lagerelement
- 68: Sicherungsring
- 69: Dichtungselement
- 70: Stützelement
- 71: Lagerelement
- 100: Antriebseinheit
- 101: Getriebestufe
- 102: Getriebestufe
- 103: Getriebegehäuse
- 104: Drehkranzlager
- 105: Drehkranzaußenlager
- 106: Drehkranzlagerinnenring
- 107: Schraubbolzen
- 108: Laufrad
- 109: Laufradträger
- 110: Kegelrad
- 111: Antriebswelle
- 112: Stirnrad
- 113: Ritzel
- 114: Schraubbolzen
- 115: Lagerelement
- 116: Lagerelement
- 117: Stützelement
- 118: Lagerschale
- 119: Sicherungsring
- 120: Dichtungsring
- 121: Schutzring
- 122: Gehäuserückwand

## Patentansprüche

1. Antriebseinheit (1, 50, 100), insbesondere für ein Flurförderfahrzeug, zumindest umfassend ein Getriebegehäuse (4, 53, 103) mit wenigstens einer Getriebestufe (2, 3, 51, 52, 101, 102) einem Antriebsmotor und einem Laufrad (14, 64, 108),
**dadurch gekennzeichnet,**
**dass** das Laufrad (14, 64, 108) unmittelbar mit einem abtriebsseitigen Kegelrad (12, 61, 110) verbunden ist, welches durch ein erstes Lagerelement (15, 67, 115) zur Lastaufnahme die zu tragende Last über den Lageraußenring ins Getriebegehäuse (4, 53, 103) einleitet und durch ein zweites Lagerelement (23, 71, 116) zur Stabilisierung gegenüber dem Getriebegehäuse (4, 53, 103) abgestützt ist.

2. Antriebseinheit (1, 50, 100) nach Anspruch 1,
**dadurch gekennzeichnet,**
**dass** das Getriebegehäuse (4, 53, 103) eine dem Laufrad (14, 64, 108) diametral abgewandte Gehäuserückwand (54, 122) aufweist, welche vollständig geschlossen und einstückig ausgebildet ist, oder dass das Getriebegehäuse (4, 53, 103) eine dem Laufrad (14, 64, 108) diametral abgewandte Gehäuserückwand aufweist, wobei das Getriebegehäuse (4, 53, 103) durch die Gehäuserückwand (21) und eine Kappe (27) verschlossen ist.

3. Antriebseinheit (1, 50, 100) nach Anspruch 1 oder 2,
**dadurch gekennzeichnet,**
**dass** das Kegelrad (12) ein in Richtung der Gehäuserückwand (21, 54, 122) einstückig angeformtes Stützelement (22) aufweist oder dass das Kegelrad (61,110) eine in Richtung zur Gehäuserückwand (21, 54, 122) offene Ausnehmung (65) aufweist.

4. Antriebseinheit (1, 50, 100) nach Anspruch 1, 2 oder 3,
**dadurch gekennzeichnet,**
**dass** das Getriebegehäuse (4, 53, 103) ein in Richtung zum Laufrad (14, 64, 108) ausgebildetes Stützelement (70, 117) aufweist, oder dass das Getriebegehäuse (4, 53, 103) auf der Innenseite eine topfförmige Ausnehmung (26) aufweist, in welche das Kegelrad (12) mit einem Stützelement (22) hineinragt.

5. Antriebseinheit (1, 50, 100) nach einem der Ansprüche 1-4,
**dadurch gekennzeichnet,**
**dass** die Stützelemente (22, 70, 117) und Ausnehmungen (26, 65) koaxial zueinander angeordnet sind und ineinander greifen.

6. Antriebseinheit (1, 50, 100) nach einem der Ansprüche 1-5,
**dadurch gekennzeichnet,**
**dass** das erste Lagerelement (15, 67, 115) koaxial innenliegend zum Laufrad (14, 64, 108) und innerhalb der Laufradbreite angeordnet ist.

7. Antriebseinheit (1, 50, 100) nach einem der Ansprüche 1-6,
**dadurch gekennzeichnet,**
**dass** das erste Lagerelement (15, 67, 115) eine innere und eine äußere Lagerschale aufweist oder dass das erste Lagerelement (15, 67, 115) eine äußere Lagerschale aufweist, während die innere Lagerschale durch eine Lagerfläche des Kegelrades gebildet ist.

8. Antriebseinheit (1, 50, 100) nach einem der Ansprüche 1-7,
**dadurch gekennzeichnet,**
**dass** die innere oder äußere Lagerschale des ersten Lagerelementes (15, 67, 115) axial verschieblich ausgebildet ist und durch einen Sicherungsring (16, 68, 119) festlegbar ist, oder dass das erste Lagerelement (15, 67, 115) durch einen Sicherungsring (16, 68, 119) festlegbar ist.

9. Antriebseinheit (1, 50, 100) nach einem der Ansprüche 1-8,
**dadurch gekennzeichnet,**
**dass** das erste Lagerelement (15, 67, 115) eine von der Laufradseite zugängliche Abdichtung aufweist.

10. Antriebseinheit (1, 50, 100) nach einem der Ansprüche 1-9,
**dadurch gekennzeichnet,**
**dass** das zweite Lagerelement (23, 71, 116) auf dem Stützelement (22) des Kegelrades (12) aufsitzt und in einer Ausnehmung (26) des Getriebegehäuses (4, 53, 103) einsitzt, oder dass das zweite Lagerelement (23, 71, 116) auf dem Stützelement (70, 117) des Getriebegehäuses (4, 53, 103) aufsitzt und in einer Ausnehmung (65) des Kegelrades (61, 110) einsitzt.

11. Antriebseinheit (1, 50, 100) nach einem der Ansprüche 1-10,
**dadurch gekennzeichnet,**
**dass** das Kegelrad (61, 110) als Hohlrad ausgebildet ist.

12. Antriebseinheit (1, 50, 100) nach einem der Ansprüche 1-11,
**dadurch gekennzeichnet,**
**dass** eine erste Getriebestufe (2, 3, 51, 52, 101, 102) aus einem durch einen Antriebsmotor über ein Antriebsritzel (57) angetriebenes Stirnrad (9, 58, 112) besteht, welches über eine Antriebswelle (111) das Drehmoment auf eine zweite Getriebestufe (2, 3, 51, 52, 101, 102) überträgt, wobei die zweite Getriebestufe (2, 3, 51, 52, 101, 102) aus einem Kegelrad (12, 61, 110) und einer Schrägverzahnung (11, 60) der Antriebwelle besteht.

13. Antriebseinheit (1, 50, 100) nach einem der Ansprüche 1-12,
**dadurch gekennzeichnet,**
**dass** das Laufrad (12, 64, 108) unmittelbar mit einem abtriebsseitigen Kegelrad (12, 61, 110) verbunden ist, welches über eine Verzahnung mit der Antriebswelle (3, 59, 111) kämmt und durch ein erstes Lagerelement (15, 76, 115) zur Lastaufnahme, die zu tragende Last über den Lageraußenring ins Getriebegehäuse (4, 53, 103) einleitet und durch ein zweites Lagerelement (23, 71, 116) zur Stabilisierung gegenüber dem Getriebegehäuse (4, 53, 103) abgestützt ist.

14. Antriebseinheit (1, 50, 100) nach einem der Ansprüche 1-13,
**dadurch gekennzeichnet,**
**dass** die Antriebswelle (111) durch zwei kopfseitige Lagerelemente abgestützt ist und/oder dass die Antriebseinheit (1, 50, 100) über ein Drehkranzlager (5, 104) mit einem Flurförderfahrzeug verbunden ist.

15. Antriebseinheit (1, 50, 100) nach einem der Ansprüche 1-14,
**dadurch gekennzeichnet,**
**dass** das Getriebegehäuse (4, 53, 103) mit dem Drehkranzlagerinnenring (6, 55, 106) verbunden ist.
